# EUROPEAN PATENT SPECIFICATION

(11) **EP 2 644 864 B1**
(45) Date of publication and mention of the grant of the patent: **30.12.2020**
(21) Application number: 13155199.6
(22) Date of filing: 14.02.2013
(51) Int. Cl.: F02C 7/232, F02C 9/26

(54) **Passive equalization flow divider valve**
Flussmengenteilerventil mit passiver Angleichung
Clapet diviseur d'écoulement à équilibrage passif

(30) Priority: 27.03.2012 US 201213431187
(43) Date of publication of application: 02.10.2013
(73) Proprietor: Hamilton Sundstrand Corporation, Charlotte, NC 28217 (US)
(72) Inventor: Gibbons, Kevin, Torrington, Connecticut 06790 (US); Dyer, Gerald P., Suffield, Connecticut 06078 (US)
(74) Representative: Dehns

(56) References cited:
- EP-A1- 1 965 056
- US-A- 4 817 389
- US-A- 5 809 771
- US-A1- 2010 037 612

## Description

### BACKGROUND

The present invention relates generally to fuel systems for gas turbine engines. More particularly, the present invention relates to systems for delivering fuel to nozzles within combustors of the gas turbine engines.

Combustors within gas turbine engines are generally of the annular configuration wherein an inner diameter wall circumscribes the engine centerline and an outer diameter wall circumscribes the inner diameter wall to define a combustion chamber therebetween. A ring-like dome typically connects the walls at their upstream end. Fuel nozzles are provided in the dome to inject fuel into a flow of compressed air flowing through the dome. The fuel is injected through small orifices that atomize the fuel to increase combustion efficiency. The nozzles are distributed within the dome evenly around the circumference of the combustor. Recent advancements in combustor design have incorporated the use of primary and secondary fuel nozzles to better control fuel injection during low flow operating states, such as during ignition, ground idle and flight idle. A few primary nozzles that are used during the low-flow conditions are dispersed around the dome and have small injector orifices. A greater number of secondary nozzles having larger orifices are interspersed between the primary nozzles and are brought into use at higher flow conditions, such as during take-off and cruise. The pressure required to properly atomize the fuel in the primary and secondary nozzles can vary widely due to the difference in orifice size.

The primary nozzles open first when fuel flow is initiated, then the secondary fuel nozzles open as fuel flow increases. The valve maintains a minimum backpressure to the primary nozzles to ensure atomization at low flow conditions. The high atomization pressure required by the primary nozzles therefore requires the valve to have a high opening pressure, thereby introducing a point of high pressure drop at the valve during all operating conditions of the engine when the valve is open. It is, however, undesirable to have such a high pressure drop located within the fuel flow. For example, a high pressure drop within the system increases the working pressure and power of the fuel pump, which introduces heat into the fuel system. The heat is an indication of fuel flow inefficiency and, in any event, must be dealt with or dissipated by the engine fuel management system. There is, therefore, a need for controlling flow to primary and secondary nozzles within gas turbine engine combustors without introducing unnecessary high pressure drops within the system. US 4 817 389 A describes a fuel injection system. US 5 809 77 A describes an aircraft engine fuel system. US 2010/037612 A1 describes a fuel diverter system for a gas turbine engine. EP 1 965 056 A1 describes a method of starting a gas turbine helicopter engine.

### SUMMARY

The present invention is directed to a method for providing fuel to primary and secondary fuel nozzles in a gas turbine engine fuel system as claimed in claim 1. The method comprises generating a fuel flow and routing primary fuel from the fuel flow to a primary fuel nozzle. Backpressure on the fuel flow is maintained using a valve. The valve is opened at increased fuel flow to route secondary fuel from the fuel flow to a secondary fuel nozzle. The valve is progressively opened under increasing fuel flows to reduce a pressure drop across the valve produced by the secondary fuel.

The present invention is directed to a fuel system for dividing fuel between primary and secondary nozzles in a gas turbine engine as claimed in claim 9. The fuel system comprises primary fuel nozzles, secondary fuel nozzles, a fuel pump and a flow divider valve. The primary and secondary fuel nozzles are coupled to a combustor in the gas turbine engine. The fuel pump generates a fuel flow. The flow divider valve receives the fuel flow and divides fuel to the primary and secondary fuel nozzles. The flow divider valve comprises a valve housing having an inlet for receiving the fuel flow, a piston disposed within the housing to maintain a backpressure on the fuel flow, means for providing primary fuel to the primary fuel nozzles, and means for providing secondary fuel to the secondary fuel nozzles while progressively decreasing the pressure drop across the means for providing the secondary fuel to the secondary fuel nozzles.

### BRIEF DESCRIPTION OF THE DRAWINGS

FIG. 1 shows a simplified schematic of a gas turbine engine fuel system that provides continuous flow to primary nozzles and equalizing flow to secondary nozzles using a flow divider valve.
FIG. 2 shows a graph depicting pressure drop in a flow divider valve versus fuel flow for conventional divider valves and passive equalization divider valves of the present invention.
FIG. 3 shows a schematic of a portion of the fuel system of FIG. 1 in which the passive equalization divider valve of the present invention comprises a series-flow, dual-valve system.
FIG. 4 shows a schematic of a portion of the fuel system of FIG. 1 in which the passive equalization divider valve of the present invention comprises a double-action, linear piston valve.
FIG. 5 shows a schematic of a portion of the fuel system of FIG. 1 in which the passive equalization divider valve of the present invention comprises a double-action, parallel-flow piston valve.

### DETAILED DESCRIPTION

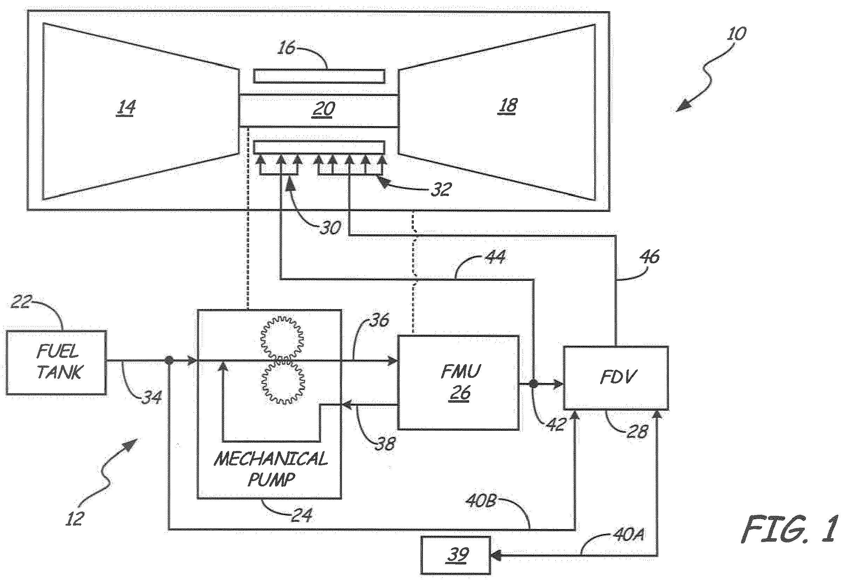

FIG. 1 shows a simplified schematic of gas turbine engine 10 having fuel system 12 in which a flow dividing valve system of the present invention is used. Gas turbine engine 10 includes compressor 14, combustor 16, turbine 18 and shaft 20. Fuel system 12 includes fuel tank 22, fuel pump 24, Fuel Metering Unit (FMU) 26 and flow divider valve 28. Combustor 16 includes primary fuel nozzles 30 and secondary fuel nozzles 32.

FMU 26 comprises an electronic valve module that regulates fuel flow from pump 24 based on sensed needs of engine 10 from, for example, communications with a Full Authority Digital Engine Controller (FADEC) (not shown). Fuel system 12 dispenses fuel from fuel tank 22 to engine 10. Fuel is drawn into pump 24 through fuel line 34 and provided to FMU 26 through fuel line 36. Fuel not needed by FMU 26 is routed back to pump 24 through return line 38. After operation of engine 10 ceases, any remaining fuel in fuel system 12 or combustor 16 is routed to a fuel ecology system 39 via fuel line 40A. Ecology system 39 purges unused fuel from combustor 16 and divider valve 28 to reduce coking and leakage of fuel after shutdown, as is known in the art. FMU 26 is fluidly coupled to divider valve 28 via fuel line 42. Primary nozzles 30 receive fuel directly from FMU 26 through fuel lines 42 and 44. Secondary nozzles 32 receive fuel from divider valve 28 through fuel line 46. Valve 28 can be provided with control pressure through fuel line 40B that connects into an upstream portion of the fuel system, such as fuel line 34.

Compressor 14 intakes and compresses a gas, such as atmospheric air, and forces the compressed gas into combustor 16. Combustor 16 also receives fuel from fuel pump 24 at primary nozzles 30 and secondary nozzles 32. Within combustor 16, the compressed gas and fuel are mixed and ignited to force expanded gas into turbine 18. Turbine 18 extracts energy from the expanded gas to cause rotation of shaft 20 before the gas is expelled from engine 10 as exhaust. Shaft 20, in turn, powers compressor 14 and other subsidiary systems. For example, power from shaft 20 is typically used to turn a tower shaft and gear system for providing input to fuel pump 24 and other accessory systems, such as a generator (not shown).

Fuel pump 24 operates based on the speed of shaft 20 and thus provides an unregulated amount of fuel to FMU 26. FMU 26 receives various engine control signals from various sensors, such as pressure and temperature sensors, within engine 10 to determine various engine needs based on performance demands being placed on engine 10. For example, the amount of fuel needed by engine 10 depends on, among other things, a throttle position actuated by an operator. Engine 10 requires different amounts of fuel under different operating conditions. For example, under start-up conditions, only a low amount of fuel flow is needed by engine 10 as compared to take-off and cruise conditions where a higher amount of fuel flow is required.

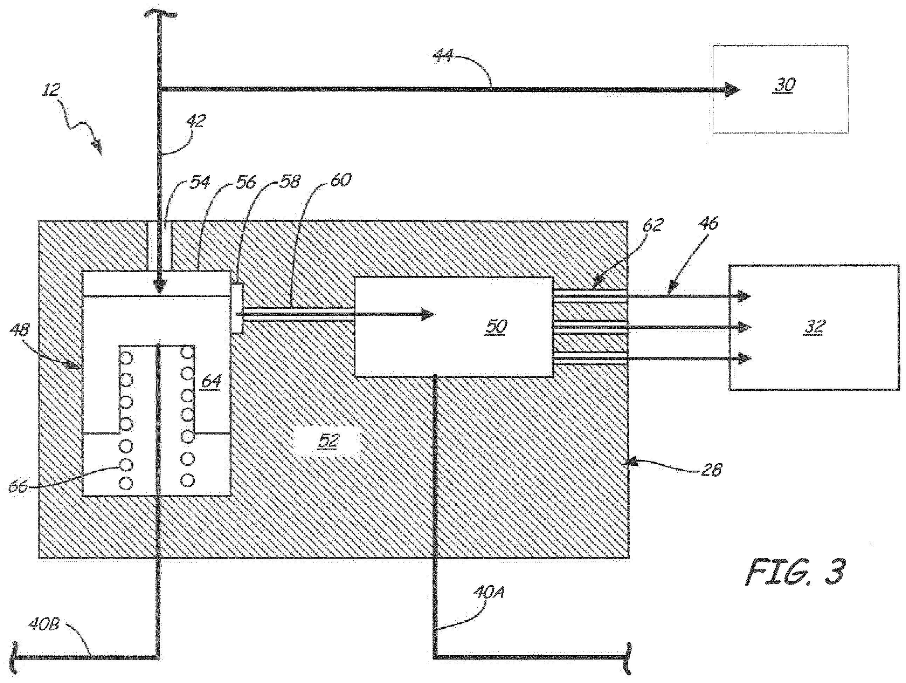

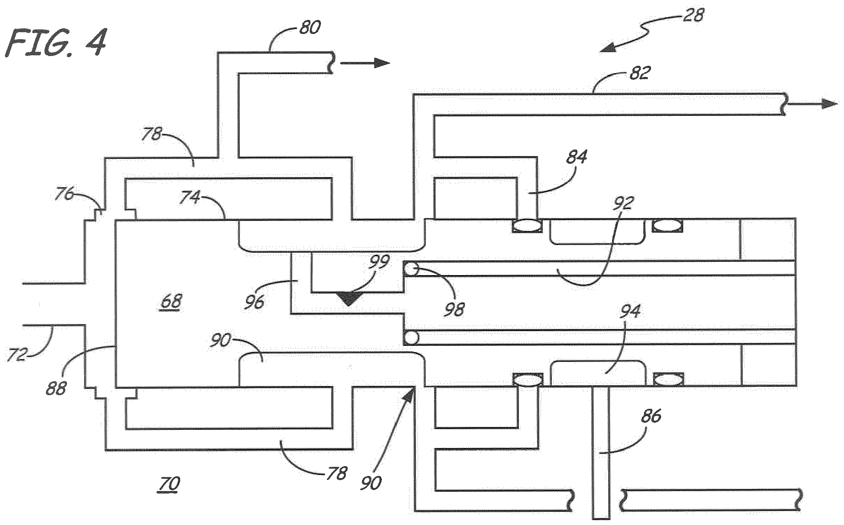

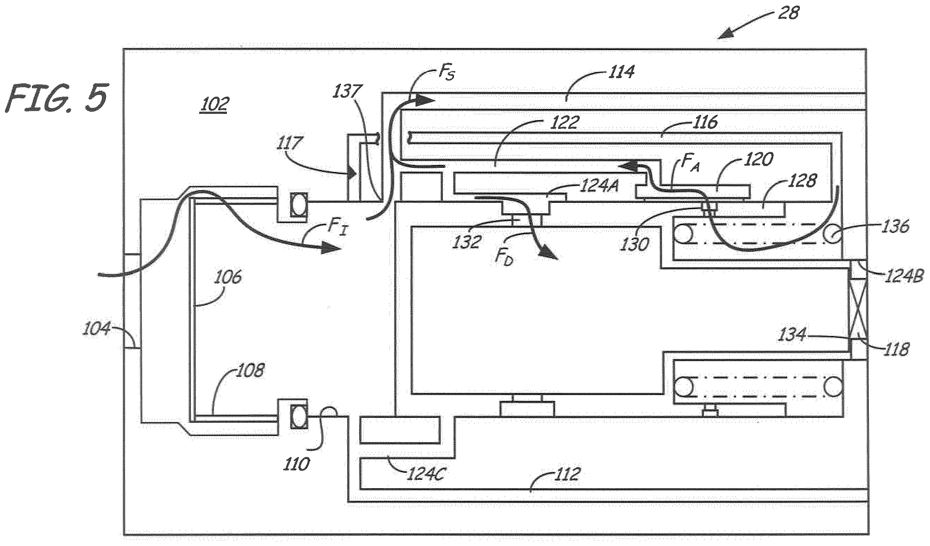

FMU 26 meters flow to combustor 14. Primary nozzles 16 are directly connected to the flow of metered fuel, as they are required to receive fuel under all operating conditions of the gas turbine engine. In particular, primary nozzles receive fuel under low-flow conditions, such as start-up. In the embodiment shown, fuel line 44 extends directly between fuel line 42 and nozzles 30, as is discussed with reference to FIG. 3. Fuel line 44 may, however, extend from valve 28 to connect to nozzles 30, as is discussed with reference to FIGS. 4 and 5. Primary nozzles 30 receive a relatively small fraction of the fuel flow from line 42. The remainder of the flow passes thru flow divider valve 28 and to secondary nozzles 32. Flow divider valve 28 is configured to open at a particular backpressure within line 42 to maintain pressurization for atomizing fuel at primary nozzles 30 at low-flow conditions. Flow divider valve 28 provides an equalizing flow of fuel to secondary nozzles 32. Flow divider valve 28 of the present invention allows secondary nozzles 32 to be passively brought into flow communication with combustor 16 as gas turbine engine 10 transitions from low-flow operating conditions to high-flow operating conditions, such as during cruise or flight maneuvers. Valve 28 operates based on fuel pressure and flow rate and is not actively controlled. Furthermore, at high fuel flow rates, valve 28 of the present invention operates to reduce the high backpressure it produces at low fuel flow rates to improve efficiency of fuel system 12.

Primary nozzles 30 are configured with small atomization orifices to provide optimal combustion conditions for start-up with a low amount of fuel. Primary nozzles 30 therefore require a large backpressure in fuel line 44 to properly operate. Secondary nozzles 32 are configured with larger atomization orifices to permit larger volumes of fuel flow such as at cruise conditions. As such, secondary nozzles do not require as large of backpressure within fuel line 46. Flow divider valve 28 maintains backpressure within fuel line 44 at low-flow conditions, but opens under high-flow conditions to increase the size of its flow restriction and reduce the pressure drop it produces. Adequate backpressures are maintained in fuel lines 44 and 46 at high flow conditions due to the inherent static fuel pressures at such elevated flow rates.

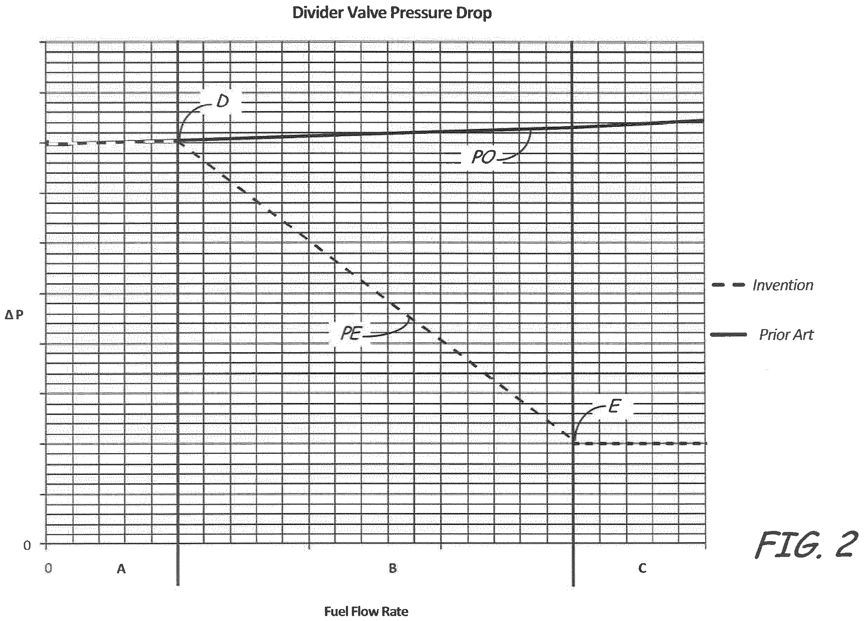

FIG. 2 shows a graph depicting pressure drop in a flow divider valve versus fuel flow for prior art divider valves and passive equalization divider valves of the present invention. The x-axis indicates fuel flow in a gas turbine engine, indicating zero flow at the y-axis, start or ground/flight idle conditions within zone A, equalization in zone B, and takeoff and cruise within zone C. The y-axis indicates pressure drop, ΔP, across the divider valve, increasing from zero to pressures above what is required to operate a typical flow divider valve. Pressure drop for conventional, non-equalizing divider valves is shown by solid line P0. Pressure drop for the passive equalization divider valves of the present invention is shown by dashed line PE.

During low flow conditions, fuel flow increases until the back pressure in the fuel system (fuel line 44) reaches point D, beyond which point the pressure drop of a conventional divider valve would continue to increase along solid line P0. However, as mentioned, continuously having to overcome the pressure drop produced by the flow divider valve after the primary nozzles have been primed at point D is inefficient. During high flow conditions the static fuel pressure is sufficient such that the need for a restriction with a large pressure drop to maintain backpressure is not needed. For example, the restriction increases the operating burden of fuel pump 24 and the rest of the thermal management system of engine 10.

Passive equalization divider valves 28 of the present invention operate in a two-stage manner to 1) provide adequate backpressure during low-flow conditions to prime primary nozzles 30, and 2) to reduce the pressure drop signature produced by the divider valve during high-flow conditions when fuel pressure is adequate to maintain pressurization of primary nozzles 30, while providing fuel to secondary nozzles 32. As shown in FIG. 2, during start-up and ground/flight idle conditions in zone A, the passive equalization divider valves of the present invention permit backpressure in line 44 to build to a particular ΔP at point D, as do conventional divider valves. At point D, passive equalization divider valve 28 continue to open to permit increasing fuel flow into secondary nozzles 32. However, rather than merely opening and then continuously being maintained open by fuel flow at the same ΔP, the passive equalization divider valves are configured to reduce the total pressure drop across the valve as the fuel flow rate increases. As shown in FIG. 2, ΔP drops linearly with respect to fuel flow in zone B. In other embodiments, ΔP may be configured to drop at faster or slower rates at different points of the fuel flow rate (i.e. the fuel flow rate can be non-linear in zone B). At point E, ΔP across passive equalization divider valve 28 levels off to reduce the workload of pump 24 under high-flow conditions.

FIG. 3 shows a schematic of a portion of fuel system 12 in which passive equalization divider valve 28 of the present invention comprises a series-flow, dual-valve system having primary pressurization valve 48 and flow divider valve 50. Valves 48 and 50 are integrated into housing 52, which includes inlet 54, piston cylinder 56, window 58, feed 60 and outlets 62. Primary pressurization valve 48 includes piston 64 and spring 66. Flow divider valve 50 comprises a divider valve of conventional design. Primary valve 48 is provided with control pressure through line 40B, which is connected to fuel line 34. Flow divider valve 50 is provided with a drain outlet at line 40A.

During operation of engine 10, fuel flows into inlet 54 of housing 52 from fuel line 42 (FIG. 1). During start-up conditions, the fuel pressure is low so that valve 48 does not open. Fuel pressure from line 40B balances static fuel pressure from inlet 54. In other embodiments, line 40B may be connected to another low pressure point within fuel system 12, such as fuel line 38. Thus, the spring force of spring 66 biases piston 64 against inlet 62 thereby preventing fuel flow to window 58. Fuel, however, continues to flow from line 42 into line 44 and on to primary nozzles 30. As the start-up of engine 10 continues, backpressure builds within line 44 allowing fuel to be atomized at nozzles 30. At a threshold pressure, the magnitude of which is sufficient to atomize the fuel at nozzles 30, primary valve 48 begins to open due to increased fuel flow rates, which overcomes the force applied by spring 66. Piston 64 retreats within piston cylinder 56 to uncover window 58, permitting fuel to leak into feed 60. This occurs within region A in FIG. 2. Divider valve 50 operates in a conventional manner to split the fuel flow into multiple paths at outlets 62 for feeding each secondary nozzle 32 individually or for feeding zones of injectors, such as with a manifold or manifolds. The pressure required to open valve 50 is much lower than the pressure required to open valve 48, as provided by spring 66. As fuel pressure continues to increase as engine 10 moves through equalization (zone B of FIG. 2), piston 64 retreats to fully uncover window 58. At such point the pressure drop produced by primary valve 48 becomes negligible, leaving only the pressure drop produced by equalizing valve 50. This occurs at point E in FIG. 2. As such, overall pressure drop in valve 28 is lowered from that provided by valve 48 to that provided by valve 50, thereby lowering the work needed to be done by pump 24 (FIG. 1). Divider valve 50 is provided with a drain outlet at line 40A, which is connected to ecology system 39 (FIG. 1) to permit unused fuel remaining in valve 50 to be removed from the fuel system.

FIG. 4 shows a schematic of a portion of fuel system 12 in which passive equalization divider valve 28 of the present invention comprises a double-action, linear piston valve having piston 68 disposed within housing 70. Housing 70 includes inlet 72, piston cylinder 74, window 76, cross-port 78, primary outlet 80, secondary outlets 82, drain line 84 and drain 86. Piston 68 includes actuation face 88, equalization port 90, spring pocket 92, drain port 94, balance port 96, spring 98 and orifice 99.

During operation of engine 10, fuel flows into inlet 72 of housing 70 from fuel line 42 (FIG. 1). Fuel also flows into balance port 96 and into spring pocket 92 to allow static fuel pressure to maintain a force balance on piston 68. The force of the motive flow of fuel, however, acts against piston face 88 to counteract spring force from spring 98 to open valve 28. During start-up and ground/flight idle conditions, with low fuel flow, piston 68 moves to uncover window 76 and partially uncover window 90. Window 76 is contoured to maintain a minimum pressure drop and to produce a linear valve position versus fuel flow relationship. Fuel flows through window 76, into cross-port 78 and out to primary outlet 80. Thus, fuel is provided to primary nozzles 30 (FIG. 1). Flow above that going to primary nozzles 30 passes thru equalization port 90 to outlets 82 to secondary nozzles 32. The pressure drop across window 90 maintains a backpressure within line 78 such that fuel provided to the primary nozzles through outlet 80 is sufficiently atomized.

Under mid to high flow conditions, piston 68 moves further to the right (with reference to FIG. 4), continuing to open equalization port 90. Equalization port 90 is shaped such that, as it continues to open, the pressure drop across it decreases to being negligible compared to the pressure drop produced by window 76. This is low enough to not produce undue burden on pump 24 and the thermal management system of engine 10.

Housing 70 is also connected to fuel line 40A (FIG. 1) to permit fuel to drain from valve 28 when engine 10 is shut down. Specifically, drain lines 84 are fluidly coupled with secondary outlets 82 to permit fuel to drain back to ecology system 39 through fuel line 40A. Drain lines 84 are fluidly coupled to drain 86 via drain port 94 when piston 68 is fully closed, or all the way to the left with reference to FIG. 4.

FIG. 5 shows a schematic of a portion of fuel system 12 in which the passive equalization divider valve 28 of the present invention comprises a double-action, parallel-flow piston valve having piston 100 disposed within housing 102. Housing 102 includes inlet 104, barrier 106, screen 108, piston cylinder 110, primary outlet 112, secondary outlet 114, control passage 116, fixed orifice 117, drain valve 118, window 120, control outlet 122 and drain passages 124A, 124B and 124C. Piston 100 includes actuation face 126, actuation flange 128, orifice 130, drain window 132, drain window 134 and spring 136.

During operation of engine 10, fuel flows into inlet 72 of housing 70 from fuel line 42 (FIG. 1). Inlet fuel F_{I} contacts barrier 106 and is pushed outward into screen 108 to remove particulates from the fuel flow. Inlet fuel F_{I} then engages actuation face 126 and pushes piston 100 to the right (with reference to FIG. 5). Initially, during start-up conditions, the fuel flow is low so that piston 100 uncovers primary outlet 112, so that most of the fuel can flow out to primary nozzles 30 (FIG. 1). A small portion of the fuel flows into line 115 as actuation fuel F_{A}. At fuel flows above start-up, window 137 opens to flow to secondary nozzles 32 via line 114.

Actuation fuel F_{A} within passage 116 travels to the inside of piston cylinder 110 behind piston 100 and within actuation flange 128. From piston cylinder 110, actuation fuel F_{A} travels through orifice 130 and window 120 and into control outlet 122. Window 120 is contoured to provide a smaller restriction with a larger pressure drop at low flow rates (when piston 100 is toward the left in FIG. 5) and to provide a larger restriction with a smaller pressure drop at high flow rates (when piston 100 is toward the right in FIG. 5). Window 137 realizes the total pressure drop in valve 28, including that of orifice 117 plus window 120. This same total pressure drop is realized by primary nozzles 30. Thus, primary nozzles 30 see sufficient pressure at low flows for proper fuel atomization.

Movement of piston 100 is dictated by the pressure across orifice 117. Initially, the summation of the pressure drops in orifice 117 and window 120 provides a backpressure so that low fuel flow will be forced into primary outlet 112. At low fuel flows, window 120 provides a large pressure drop that limits flow into passage 116. As increased fuel flow continues to stroke piston 100, window 120 opens to increase its restriction size and to reduce backpressure downstream of orifice 117. Thus, more actuation fuel F_{A} is permitted to flow into control passage 116. As piston 100 continues to stroke open, secondary fuel F_{S} increases thru secondary outlet 114, where it is joined by actuation fuel F_{A} for distribution to secondary nozzles 32 (FIG. 1). Actuation fuel F_{A} ultimately joins with secondary outlet 114 for distribution to secondary nozzles 32. Housing 102 can be provided with a plurality of secondary outlets 114 for distributing fuel to a plurality of secondary nozzles or secondary manifolds. However, only one of the secondary outlets 114 need be provided with control passage 116, fixed orifice 117 and window 120 to control the position of piston 100.

Housing 102 and piston 100 also include drain lines and windows to permit fuel to drain from valve 28 at shut-down of engine 10. Specifically, drain fuel F_{D} is permitted into the interior of piston 100 through drain line 124A, which engages drain window 132 across the entire stroke length of piston 100. When piston 100 retreats under lack of fuel pressure drain window 132 engages drain line 124C to let fuel drain out to primary nozzles 30. Additionally, with piston 100 retracted, drain valve 118 can be configured to open to allow fuel to leave valve housing 102 at drain line 124B, which connects to fuel line 39 through fuel line 40A (FIG. 1).

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method for providing fuel to primary and secondary fuel nozzles in a gas turbine engine fuel system (12), the method comprising:
generating a fuel flow at a low flow rate;
routing primary fuel from the fuel flow to a primary fuel nozzle (30);
maintaining a backpressure on the fuel flow using a passive equalization divider valve (28);
wherein maintaining a backpressure on the fuel flow comprises:
biasing a spring-loaded piston (64, 100) within a piston chamber of the valve housing (102) against the fuel flow opening the passive equalization divider valve at a high flow rate of the fuel flow to route secondary fuel from the fuel flow to secondary fuel nozzles (32); and
progressively opening the passive equalization divider valve (28) from the low flow rate to the high flow rate to reduce a pressure drop across the first flow divider valve (28) produced by the secondary fuel; and wherein progressively opening the valve from the low flow rate to the high flow rate comprises:
moving the spring-loaded piston against a window in the housing (102) to produce the secondary fuel, and further comprising routing the secondary fuel through a multi-port flow divider valve (50) disposed within the housing.

2. The method of claim 1 wherein progressively opening the passive equalization divider valve (28) from the low flow rate to the high flow rate to reduce a pressure drop across the valve produced by the secondary fuel further comprises opening the passive equalization divider valve until the pressure drop is negligible.

3. The method of claim 1 and further comprising dividing the secondary fuel into a plurality of secondary nozzles, or further comprising:
routing fuel flow to behind the spring-biased piston (64, 100) in the piston chamber to balance static fuel pressure across the piston.

4. The method of claim 1 wherein routing primary fuel from the fuel flow to a primary fuel nozzle (30) comprises:
displacing the piston (64, 102) past a contoured window (76, 120) in the housing to achicvc a linear relationship between valve position and primary fuel flow.

5. The method of claim 4 wherein progressively opening the passive equalization divider valve from the low flow rate to the high flow rate comprises:
moving a slot on the piston (28, 48, 100) that is in fluid communication with the primary fuel into fluid communication with a plurality of secondary nozzle outlets in the valve housing.

6. The method of claim 4, wherein the slot is contoured to permit a first secondary fuel flow rate over a first length of the slot and a second secondary fuel flow rate over a second length of the slot.

7. The method of claim 1 wherein:
routing primary fuel from the fuel flow to a primary fuel nozzle (30) comprises displacing the piston past a first window in the housing; and
opening the valve at the high flow rate of the fuel flow to route secondary fuel from the fuel flow to secondary nozzles comprises displacing the piston past a second window in the housing.

8. The method of claim 1, further comprising:
displacing the piston (64, 100) past a third window (132) located between the first (120) and second (137) windows to route equalizing fuel from the fuel flow to behind the piston (100) in the piston chamber;
passing the equalizing fuel through a fixed orifice (130) on the piston (100), and
passing the equalizing fuel from the piston chamber through a variable orifice en route to the second window.

9. A fuel system for dividing fuel between primary and secondary nozzles in a gas turbine engine, the fuel system comprising:
primary (30) and secondary (32) fuel nozzles coupled to a combustor (16) in the gas turbine engine (10);
a fuel pump (24) that generates a fuel flow;
a passive equalization divider valve (28) that receives the fuel flow and divides fuel to the primary (30) and secondary (32) fuel nozzles, the passive equalization divider valve (28) comprising:
a valve housing having an inlet for receiving the fuel flow;
a piston (64,100) disposed within the housing (102) to maintain a back pressure on the fuel flow;
means for providing primary fuel to the primary fuel nozzles; and
means for providing secondary fuel to the secondary fuel nozzles while progressively decreasing the pressure drop across the means for providing the secondary fuel to the secondary fuel nozzles, the means for providing secondary fuel to the secondary fuel nozzles comprising a window in the valve housing disposed along the piston to route the secondary fuel through a second fuel line; and
a multi-port flow divider valve (50) disposed within the housing and coupled to the secondary fuel line and having a plurality of outlets fluidly coupled to the secondary nozzles

10. The fuel system of claim 9 wherein:
the means for providing primary fuel to the primary fuel nozzles comprises:
a window in the housing fluidly coupled to a first fluid line extending to the primary nozzles, wherein the window is contoured to achieve a linear relationship between valve (28) position and primary fuel flow; and
the means for providing secondary fuel to the secondary fuel nozzles comprises:
a slot on the piston that is in fluid communication with the first fuel line and a second fuel line in fluid communication with the secondary fuel nozzles, and wherein the slot is contoured to permit a first secondary fuel flow rate over a first length of the slot and a second secondary fuel flow rate over a second length of the slot.

11. The fuel system of claim 9 wherein:
the means for providing primary fuel to the primary fuel nozzles comprises:
a first window (120) in the housing coupled to a first fuel line extending from the valve housing to the primary nozzles; and
the means for providing secondary fuel to the secondary fuel nozzles comprises:
a second window (137) in the housing coupled to a second fuel line extending from the valve housing to the secondary nozzles.

12. The fuel system of claim 9, wherein the means for providing secondary fuel to the secondary fuel nozzles further comprises:
a third window (132) in the housing positioned between the first (120) and second (137) windows, the third (132) window coupled to a third fuel line extending to a cavity behind the spring-actuated piston;
a fixed orifice (130) positioned on the piston (100) to receive fuel from the cavity;
a fourth fuel line extending from the cavity to the second fuel line; and
a variable orifice positioned between the orifice and the fourth fuel line.

13. The fuel system of claim 9 and further comprising means for routing fuel flow to a cavity behind the piston.

14. The fuel system of claim 9, wherein the means for routing fuel flow to the cavity behind the piston comprises:
a fuel passage extending through the piston, or wherein the means for routing fuel flow to the cavity behind the piston comprises:
a fuel line connecting the fuel flow to the cavity behind the piston.

15. The fuel system of claim 9 and further comprising:
a fuel tank (22) from which the fuel pump (24) receives fuel; and
a fuel metering unit (26) disposed between the fuel pump (24) and the passive equalization divider valve (28) to deliver a metered flow of fuel to the passive equalization divider valve and to return unused fuel to a fuel ecology system, and further comprising a drain line (84) for connecting the means for providing secondary fuel to the fuel ecology system.

## Patentansprüche

1. Verfahren zum Bereitstellen von Treibstoff an primären und sekundären Treibstoffdüsen in einem Gasturbinentriebwerkstreibstoffsystem (12), wobei das Verfahren Folgendes umfasst:
Erzeugen eines Treibstoffflusses mit einer niedrigen Flussrate;
Leiten eines primären Treibstoffes aus dem Treibstofffluss zu einer primären Treibstoffdüse (30);
Aufrechterhalten eines Gegendrucks auf den Treibstofffluss unter Verwendung eines Verteilerventils (28) mit passiver Angleichung;
wobei das Beibehalten eines Gegendrucks auf den Treibstofffluss Folgendes umfasst:
Vorspannen eines federbelasteten Kolbens (64, 100) innerhalb einer Kolbenkammer des Ventilgehäuses (102) gegen die Treibstoffflussöffnung des Verteilerventils mit passiver Angleichung mit einer hohen Flussrate des Treibstoffflusses, um einen sekundären Treibstoff aus dem Treibstofffluss zu sekundären Treibstoffdüsen (32) zu leiten; und
allmähliches Öffnen des Verteilerventils (28) mit passiver Angleichung aus der niedrigen Flussrate in die hohe Flussrate, um einen Druckabfall über das erste Flussmengenverteilerventil (28) zu verringern, der durch den sekundären Treibstoff hervorgerufen wird; und wobei das allmähliche Öffnen des Ventils aus der niedrigen Flussrate in die hohe Flussrate Folgendes umfasst:
Bewegen des federbelasteten Kolbens gegen ein Fenster in dem Gehäuse (102), um den sekundären Treibstoff hervorzurufen, und ferner umfassend Leiten des sekundären Treibstoffes durch ein Flussmengenverteilerventil (50) mit mehreren Öffnungen, das innerhalb des Gehäuses (28, 59) angeordnet ist.

2. Verfahren nach Anspruch 1, wobei das allmähliche Öffnen des Verteilerventils (28) mit passiver Angleichung aus der niedrigen Flussrate in die hohe Flussrate, um einen Druckabfall über das Ventil zu verringern, der durch den sekundären Treibstoff hervorgerufen wird, ferner Öffnen des Verteilerventils mit passiver Angleichung, bis der Druckabfall vernachlässigbar ist, umfasst.

3. Verfahren nach Anspruch 1 und ferner umfassend Verteilen des sekundären Treibstoffes in eine Vielzahl von sekundären Düsen oder ferner umfassend:
Leiten des Treibstoffflusses hinter den federbelasteten Kolben (64, 100) in der Kolbenkammer, um einen statischen Treibstoffdruck über den Kolben auszugleichen.

4. Verfahren nach Anspruch 1, wobei das Leiten des primären Treibstoffes aus dem Treibstofffluss zu einer primären Treibstoffdüse (30) Folgendes umfasst:
Verschieben des Kolbens (64, 102) an einem konturierten Fenster (76, 120) in dem Gehäuse vorbei, um eine lineare Beziehung zwischen einer Ventilposition und dem primären Treibstofffluss zu erreichen.

5. Verfahren nach Anspruch 4, wobei das allmähliche Öffnen des Verteilerventils mit passiver Angleichung aus der niedrigen Flussrate in die hohe Flussrate Folgendes umfasst:
Bewegen eines Schlitzes in dem Kolben (28, 48, 100), der in Fluidkommunikation mit dem primären Treibstoff steht, in Fluidkommunikation mit einer Vielzahl von sekundären Düsenausgängen in dem Ventilgehäuse.

6. Verfahren nach Anspruch 4, wobei der Schlitz konturiert ist, um eine erste Flussrate des sekundären Treibstoffes über eine erste Länge des Schlitzes und eine zweite Flussrate des sekundären Treibstoffes über eine zweite Länge des Schlitzes zu ermöglichen.

7. Verfahren nach Anspruch 1, wobei:
das Leiten des primären Treibstoffes aus dem Treibstofffluss zu einer primären Treibstoffdüse (30) Verschieben des Kolbens an einem ersten Fenster in dem Gehäuse vorbei umfasst; und
ein Öffnen des Ventils bei der hohen Flussrate des Treibstoffflusses, um einen sekundären Treibstoff aus dem Treibstofffluss zu Düsen zu leiten, Verschieben des Kolbens an einem zweiten Fenster in dem Gehäuse vorbei umfasst.

8. Verfahren nach Anspruch 1, ferner umfassend:
Verschieben des Kolbens (64, 100) an einem dritten Fenster (132) vorbei, das sich zwischen dem ersten (120) und zweiten (137) Fenster befindet, um Angleichungstreibstoff aus dem Treibstofffluss hinter den Kolben (100) in der Kolbenkammer zu leiten;
Befördern des Angleichungstreibstoffes durch eine feste Öffnung (130) in dem Kolben (100), und
Befördern des Angleichungstreibstoffes aus der Kolbenkammer durch eine variable Öffnung auf dem Weg zu dem zweiten Fenster.

9. Treibstoffsystem zum Verteilen von Treibstoff zwischen primären und sekundären Düsen in einem Gasturbinentriebwerk, wobei das Treibstoffsystem Folgendes umfasst:
primäre (30) und sekundäre (32) Treibstoffdüsen, die an eine Brennkammer (16) in dem Gasturbinentriebwerk (10) gekoppelt sind;
eine Treibstoffpumpe (24), die einen Treibstofffluss erzeug;
ein Verteilerventil (28) mit passiver Angleichung, das den Treibstofffluss empfängt und Treibstoff auf die primären (30) und sekundären (32) Treibstoffdüsen verteilt, wobei das Verteilerventil (28) mit passiver Angleichung Folgendes umfasst:
ein Ventilgehäuse, das einen Einlass zum Empfangen des Treibstoffflusses aufweist;
einen Kolben (64, 100), der innerhalb des Gehäuses (102) angeordnet ist, um einen Gegendruck auf den Treibstofffluss aufrechtzuerhalten;
Mittel zum Bereitstellen eines primären Treibstoffes an den primären Treibstoffdüsen; und
Mittel zum Bereitstellen eines sekundären Treibstoffes an den sekundären Treibstoffdüsen, während der Druckabfall über die Mittel zum Bereitstellen des sekundären Treibstoffes an den sekundären Treibstoffdüsen allmählich verringert wird, wobei die Mittel zum Bereitstellen des sekundären Treibstoffes an den sekundären Treibstoffdüsen ein Fenster in dem Ventilgehäuse umfassen, das entlang des Kolbens angeordnet ist, um den sekundären Treibstoff durch eine sekundäre Treibstoffleitung zu leiten; und
ein Flussmengenverteilerventil (50) mit mehreren Öffnungen, das innerhalb des Gehäuses angeordnet und an die sekundäre Treibstoffleitung gekoppelt ist und eine Vielzahl von Ausgängen aufweist, die fluidisch an die sekundären Düsen gekoppelt sind.

10. Treibstoffsystem nach Anspruch 9, wobei:
die Mittel zum Bereitstellen des primären Treibstoffes an den primären Treibstoffdüsen Folgendes umfassen:
ein Fenster in dem Gehäuse, das fluidisch an eine erste Fluidleitung gekoppelt ist, die sich zu den primären Düsen erstreckt, wobei das Fenster konturiert ist, um eine lineare Beziehung zwischen einer Position des Ventils (28) und dem primären Treibstofffluss zu erreichen; und
die Mittel zum Bereitstellen des sekundären Treibstoffes an den sekundären Treibstoffdüsen Folgendes umfassen:
einen Schlitz an dem Kolben, der in Fluidkommunikation mit der ersten Fluidleitung und einer zweiten Fluidleitung steht, die in Fluidkommunikation mit den sekundären Treibstoffdüsen steht, und wobei der Schlitz konturiert ist, um eine erste Flussrate des sekundären Treibstoffes über eine erste Länge des Schlitzes und eine zweite Flussrate des sekundären Treibstoffes über eine zweite Länge des Schlitzes zu ermöglichen.

11. Treibstoffsystem nach Anspruch 9, wobei:
die Mittel zum Bereitstellen des primären Treibstoffes an den primären Treibstoffdüsen Folgendes umfassen:
ein erstes Fenster (120) in dem Gehäuse, das an eine erste Treibstoffleitung gekoppelt ist, die sich von dem Ventilgehäuse zu den primären Düsen erstreckt; und
die Mittel zum Bereitstellen des sekundären Treibstoffes an den sekundären Treibstoffdüsen Folgendes umfassen:
ein zweites Fenster (137) in dem Gehäuse, das an eine zweite Treibstoffleitung gekoppelt ist, die sich von dem Ventilgehäuse zu den sekundären Düsen erstreckt.

12. Treibstoffsystem nach Anspruch 9, wobei die Mittel zum Bereitstellen eines sekundären Treibstoffes an den sekundären Treibstoffdüsen ferner Folgendes umfasst:
ein drittes Fenster (132) in dem Gehäuse, das zwischen dem ersten (120) und zweiten (137) Fenster positioniert ist, wobei das dritte (132) Fenster an eine dritte Treibstoffleitung gekoppelt ist, die sich zu einem Hohlraum hinter dem federbelasteten Kolben erstreckt;
eine feste Öffnung (130), die an dem Kolben (100) positioniert ist, um Treibstoff aus dem Hohlraum zu empfangen;
eine vierte Treibstoffleitung, die sich von dem Hohlraum zu der zweiten Treibstoffleitung erstreckt; und
eine variable Öffnung, die zwischen der Öffnung und der vierten Treibstoffleitung positioniert ist.

13. Treibstoffsystem nach Anspruch 9 und ferner umfassend Mittel zum Leiten des Treibstoffflusses zu dem Hohlraum hinter dem Kolben.

14. Treibstoffsystem nach Anspruch 9, wobei die Mittel zum Leiten des Treibstoffflusses zu dem Hohlraum hinter dem Kolben Folgendes umfassen:
einen Treibstoffdurchgang, der sich durch den Kolben erstreckt, oder wobei die Mittel zum Leiten des Treibstoffflusses hinter den Kolben Folgendes umfassen:
eine Treibstoffleitung, die den Treibstofffluss mit dem Hohlraum hinter dem Kolben verbindet.

15. Treibstoffsystem nach Anspruch 9 und ferner umfassend:
einen Treibstofftank (22), aus dem die Treibstoffpumpe (24) Treibstoff empfängt; und
eine Treibstoffmesseinheit (26), die zwischen der Treibstoffpumpe (24) und dem Verteilerventil (28) mit passiver Angleichung angeordnet ist, um einen abgemessenen Treibstofffluss an das Verteilerventil mit passiver Angleichung abzugeben und unverwendeten Treibstoff an ein Treibstoffeinsparungssystem zurück zu leiten, und ferner umfassend eine Abflussleitung (84) zum Verbinden der Mittel zum Bereitstellen des sekundären Treibstoffes mit dem Treibstoffeinsparungssystem.

## Revendications

1. Procédé permettant d'alimenter en carburant des buses de carburant primaire et secondaire dans un circuit de carburant de moteur à turbine à gaz (12), le procédé comprenant :
la génération d'un écoulement de carburant à un faible débit ;
l'acheminement du carburant primaire de l'écoulement de carburant à une buse de carburant primaire (30) ;
le maintien d'une contre-pression sur l'écoulement de carburant en utilisant un clapet diviseur à équilibrage passif (28) ;
dans lequel le maintien d'une contre-pression sur l'écoulement de carburant comprend :
la sollicitation d'un piston à ressort (64, 100) à l'intérieur d'une chambre de piston du logement de clapet (102) contre l'écoulement de carburant l'ouverture du clapet diviseur à équilibrage passif à un débit élevé de l'écoulement de carburant pour acheminer le carburant secondaire de l'écoulement de carburant aux buses de carburant secondaire (32) ; et
l'ouverture progressive du clapet diviseur à équilibrage passif (28) du faible débit au débit élevé pour réduire une chute de pression à travers le premier clapet diviseur d'écoulement (28) produite par le carburant secondaire ; et dans lequel l'ouverture progressive du clapet du faible débit au débit élevé comprend :
le déplacement du piston à ressort contre une fenêtre dans le logement (102) pour produire le carburant secondaire, et comprenant en outre l'acheminement du carburant secondaire à travers un clapet diviseur d'écoulement (50) à orifices multiples disposé à l'intérieur du logement (28, 59).

2. Procédé selon la revendication 1, dans lequel l'ouverture progressive du clapet diviseur à équilibrage passif (28) du faible débit au débit élevé pour réduire une chute de pression à travers le clapet produite par le carburant secondaire comprend en outre l'ouverture du clapet diviseur à équilibrage passif jusqu'à ce que la chute de pression soit négligeable.

3. Procédé selon la revendication 1 et comprenant en outre la division du carburant secondaire en une pluralité de buses secondaires, ou comprenant en outre :
l'acheminement de l'écoulement de carburant jusqu'à l'arrière du piston à ressort (64, 100) dans la chambre de piston pour équilibrer la pression de carburant statique à travers le piston.

4. Procédé selon la revendication 1, dans lequel l'acheminement du carburant primaire de l'écoulement de carburant à une buse de carburant primaire (30) comprend :
le déplacement du piston (64, 102) au-delà d'une fenêtre profilée (76, 120) dans le logement pour obtenir une relation linéaire entre la position de clapet et l'écoulement de carburant primaire.

5. Procédé selon la revendication 4, dans lequel l'ouverture progressive du clapet diviseur à équilibrage passif du faible débit au débit élevé comprend :
le déplacement d'une fente sur le piston (28, 48, 100) qui est en communication fluidique avec le carburant primaire en communication fluidique avec une pluralité de sorties de buse secondaire dans le logement de clapet.

6. Procédé selon la revendication 4, dans lequel la fente est profilée pour permettre un premier débit de carburant secondaire sur une première longueur de la fente et un second débit de carburant secondaire sur une seconde longueur de la fente.

7. Procédé selon la revendication 1, dans lequel :
l'acheminement de carburant primaire de l'écoulement de carburant à une buse de carburant primaire (30) comprend le déplacement du piston au-delà d'une première fenêtre dans le logement ; et
l'ouverture du clapet au débit élevé de l'écoulement de carburant pour acheminer le carburant secondaire de l'écoulement de carburant aux buses comprend le déplacement du piston au-delà d'une deuxième fenêtre dans le logement.

8. Procédé selon la revendication 1, comprenant en outre :
le déplacement du piston (64, 100) au-delà d'une troisième fenêtre (132) située entre les première (120) et deuxième (137) fenêtres pour acheminer le carburant d'équilibrage de l'écoulement de carburant jusqu'à l'arrière du piston (100) dans la chambre de piston ;
le passage du carburant d'équilibrage à travers un orifice fixe (130) sur le piston (100), et
le passage du carburant d'équilibrage de la chambre de piston à travers un orifice variable en direction de la deuxième fenêtre.

9. Circuit de carburant pour diviser du carburant entre des buses primaire et secondaire dans un moteur à turbine à gaz, le circuit de carburant comprenant :
des buses de carburant primaire (30) et secondaire (32) couplées à une chambre de combustion (16) dans le moteur à turbine à gaz (10) ;
une pompe à carburant (24) qui génère un écoulement de carburant ;
un clapet diviseur à équilibrage passif (28) qui reçoit l'écoulement de carburant et divise le carburant jusqu'aux buses de carburant primaire (30) et secondaire (32), le clapet diviseur à équilibrage passif (28) comprenant :
un logement de clapet ayant une entrée pour recevoir l'écoulement de carburant ;
un piston (64, 100) disposé à l'intérieur du logement (102) pour maintenir une contre-pression sur l'écoulement de carburant ;
un moyen permettant de fournir du carburant primaire aux buses de carburant primaire ; et
un moyen permettant de fournir du carburant secondaire aux buses de carburant secondaire tout en diminuant progressivement la chute de pression à travers le moyen permettant de fournir le carburant secondaire aux buses de carburant secondaire, le moyen permettant de fournir du carburant secondaire aux buses de carburant secondaire comprenant une fenêtre dans le logement de clapet disposé le long du piston pour acheminer le carburant secondaire à travers une deuxième conduite de carburant ; et
un clapet diviseur d'écoulement (50) à orifices multiples disposé à l'intérieur du logement et couplé à la conduite de carburant secondaire et ayant une pluralité de sorties couplées fluidiquement aux buses secondaires.

10. Circuit de carburant selon la revendication 9, dans lequel :
le moyen permettant de fournir du carburant primaire aux buses de carburant primaire comprend :
une fenêtre dans le logement couplée fluidiquement à une première conduite de fluide s'étendant jusqu'aux buses primaires, dans lequel la fenêtre est profilée pour obtenir une relation linéaire entre la position de clapet (28) et l'écoulement de carburant primaire ; et
le moyen permettant de fournir du carburant secondaire aux buses de carburant secondaire comprend :
une fente sur le piston qui est en communication fluidique avec la première conduite de carburant et une deuxième conduite de carburant en communication fluidique avec les buses de carburant secondaire, et dans lequel la fente est profilée pour permettre un premier débit de carburant secondaire sur une première longueur de la fente et un second débit de carburant secondaire sur une seconde longueur de la fente.

11. Circuit de carburant selon la revendication 9, dans lequel :
le moyen permettant de fournir du carburant primaire aux buses de carburant primaire comprend :
une première fenêtre (120) dans le logement couplée à une première conduite de carburant s'étendant du logement de clapet aux buses primaires ; et
le moyen permettant de fournir du carburant secondaire aux buses de carburant secondaire comprend :
une deuxième fenêtre (137) dans le logement couplée à une deuxième conduite de carburant s'étendant du logement de clapet aux buses secondaires.

12. Circuit de carburant selon la revendication 9, dans lequel le moyen permettant de fournir du carburant secondaire aux buses de carburant secondaire comprend :
une troisième fenêtre (132) dans le logement positionnée entre les première (120) et deuxième (137) fenêtres, la troisième (132) fenêtre étant couplée à une troisième conduite de carburant s'étendant jusqu'à une cavité à l'arrière du piston actionné par ressort ;
un orifice fixe (130) positionné sur le piston (100) pour recevoir du carburant provenant de la cavité ;
une quatrième conduite de carburant s'étendant de la cavité à la deuxième conduite de carburant ; et
un orifice variable positionné entre l'orifice et la quatrième conduite de carburant.

13. Circuit de carburant selon la revendication 9, et comprenant en outre un moyen permettant d'acheminer un écoulement de carburant jusqu'à une cavité à l'arrière du piston.

14. Circuit de carburant selon la revendication 9, dans lequel le moyen permettant d'acheminer un écoulement de carburant jusqu'à la cavité à l'arrière du piston comprend :
un passage de carburant s'étendant à travers le piston, ou dans lequel le moyen permettant d'acheminer un écoulement de carburant jusqu'à la cavité à l'arrière du piston comprend :
une conduite de carburant reliant l'écoulement de carburant à la cavité à l'arrière du piston.

15. Circuit de carburant selon la revendication 9, et comprenant en outre :
un réservoir de carburant (22) à partir duquel la pompe à carburant (24) reçoit du carburant ; et
une unité de dosage de carburant (26) disposée entre la pompe à carburant (24) et le clapet diviseur à équilibrage passif (28) pour délivrer un écoulement dosé de carburant au clapet diviseur à équilibrage passif et pour retourner le carburant non utilisé à un circuit écologique de carburant, et comprenant en outre une conduite de vidange (84) pour relier le moyen permettant de fournir du carburant secondaire au circuit écologique de carburant.
